# EUROPÄISCHE PATENTSCHRIFT

(11) **EP 1 754 407 B1**
(45) Veröffentlichungstag und Bekanntmachung des Hinweises auf die Patenterteilung: **12.08.2009**
(21) Anmeldenummer: 06015290.7
(22) Anmeldetag: 22.07.2006
(51) Int. Cl.: A01D 43/08

(54) **Landwirtschaftliche Erntemaschine**
Agricultural harvesting machine
Machine de récolte agricole

(30) Priorität: 19.08.2005 DE 102005039596
(43) Veröffentlichungstag der Anmeldung: 21.02.2007
(73) Patentinhaber: Maschinenfabrik Bernard Krone GmbH, 48480 Spelle (DE)
(72) Erfinder: Krone, Bernard, Dr.-Ing. E. h., 48480 Spelle (DE); Horstmann, Josef, Dr.-Ing., 49479 Ibbenbüren (DE)

(56) Entgegenhaltungen:
- EP-A- 0 843 959
- EP-A- 1 271 139
- EP-A- 1 360 891
- EP-A1- 1 396 184
- US-B1- 6 421 990

## Beschreibung

Die Erfindung betrifft eine landwirtschaftliche Erntemaschine mit mindestens einer Einrichtung zur Aufnahme und Förderung des Erntegutes und einer Weiterverarbeitungseinrichtung zur Bearbeitung des Erntegutes, wobei die Bearbeitungsintensität (Zettwirkung, Schnittlänge etc.) des Erntegutes durch die Weiterverarbeitungseinrichtung in Abhängigkeit mindestens eines Parameters des Erntegutes, welcher durch eine Messeinrichtung ermittelt wird, insbesondere selbsttätig einstellbar ist.

Messeinrichtungen an landwirtschaftlichen Maschinen, deren ermittelte Daten bezüglich Pflanzenbestand oder Pflanzenzustand der Maschineneinstellung dienen, sind bisher in verschiedenen Ausführungsformen insbesondere im Bereich der Dünge- und Austragsmaschinen und im Bereich der Unkrautbekämpfung bekannt. Im Bereich der oben genannten Erntemaschinengattung hingegen, ist bisher keine serienreife Anwendung in der Praxis verfügbar.

Eine derartige Erntemaschine könnte unter anderem ein Mähwerk mit Aufbereiter, aber vorzugsweise ein Feldhäcksler sein. Bei der Maisernte ist bekannt, dass für eine optimale Silagequalität, der Reifegrad der Maispflanzen maßgeblich die Häcksellänge bestimmt. Darüber hinaus gibt es Auswirkungen auf Betriebsparameter des Feldhäckslers bzgl. der Durchsatzleitung und des Kraftstoffverbrauchs. Während bei modernen Maishäckslern eine Variation der Häcksellänge durch den Fahrer während des Erntevorgangs Stand der Technik ist, gibt es noch keine Lösung zur online-Messung des Reifegrades als Schlüsselkomponente zur vollautomatischen Anpassung der Häcksellänge an den Reifegrad. Die Verfügbarkeit eines Feldhäckslers mit einem solchen System hätte sowohl Qualitätsverbesserungen als auch eine weitere Entlastung des Fahrers zur Folge. Bereits die manuelle Variation der Häcksellänge über das Terminal während des Erntevorgangs hat im Vergleich zu einer Unterbrechung des Erntevorgangs in Verbindung mit einer mechanischen Anpassung zu Verbesserungen geführt.

Die EP 1 360 891 offenbart eine Landwirtschaftliche Erntemaschine mit den Merkmalen des Oberbegriffes des Anspruchs 1.

Der Erfindung liegt daher die Aufgabe zugrunde eine landwirtschaftliche Erntemaschine der oben beschriebenen Art derart zu verbessern, dass wenigstens ein Betriebsparameter der Erntemaschine in Abhängigkeit vom Reifegrad des Ernteguts, insbesondere selbsttätig einstellbar ist.

Die Aufgabe wird erfindungsgemäß durch die Lehre des Patentanspruchs 1 gelöst, wobei die Merkmale der weiteren Patentansprüche die Lösung vorteilhaft ausgestalten. Es wird vorgeschlagen, einen optoelektronischen Sensor in den Erntegutfluss der Erntemaschine zu integrieren. Das Messprinzip eines derartigen Sensors basiert auf dem bekannten spektralen Reflexionsverhalten von Pflanzen. Das Sensorsystem besteht vorteilhaft aus zwei schmalbandigen Lichtquellen (z. B. LEDs) die das Erntegut beleuchten und mit unterschiedlichen Wellenlängen arbeiten, wobei die Wellenlängen aufgrund der zu messenden Signatur, auf die später noch eingegangen wird, gezielt ausgewählt werden. Die Lichtquellen werden gepulst betrieben, was unter anderem die Verwendung von zwei oder mehr Wellenlängen ermöglicht, außerdem erlaubt die Pulsung eine selektive Detektion von Störgrößen (z. B. "kein Erntegut", "Sonnenlicht"), da sich die Signaturen in diesen Fällen von der des Erntegutes unterscheiden. Die Pulsung erfolgt so schnell, dass die Messungen quasi am gleichen Messpunkt des Erntegutstromes durchgeführt werden. Als Fotoempfänger wird innerhalb des Sensorsystems nur eine einzelne Fotodiode verwendet. Das gesamte System ist kompakt in einem möglichst kleinen Gehäuse untergebracht, welches eine optisch transparente Sensorscheibe als Abdeckung aufweist.

Bei der Integration in einem Feldhäcksler wird der Sensor erfindungsgemäß derart unterhalb des Erntegutstromes angeordnet, dass die Erntegutpflanzen während ihrer Förderung zur Weiterverarbeitungseinrichtung, welche beim Feldhäcksler das Häckselaggregat darstellt, über die Sensorscheibe geführt werden ohne das der Sensor dabei ein Hindernis für den Gutstrom darstellt. Hierbei wird der Effekt der "Selbstreinigung" der Oberfläche der Sensorscheibe durch die Pflanzen ausgenutzt. Vorteilhaft wird der Sensor in den Einzugsbereich des Erntevorsatzes beim Feldhäcksler integriert, da hier eine hohe Kontaktwahrscheinlichkeit mit den noch ganzen Pflanzen des Ernteguts mit der Sensorscheibe vorliegt, insbesondere wenn der Sensor unterhalb des Erntegutstromes liegt. Die vorteilhafte Anordnung des Sensors vor der Weiterverarbeitungseinrichtung der Erntemaschine ermöglicht eine wesentlich differenziertere Messung an ganzen Pflanzenteilen, wie sie an einer Stelle hinter der Weiterverarbeitungseinrichtung im Erntegutfluss durch die dort vorliegende Durchmischung verschiedener Pflanzenstrukturen nachteilig nicht mehr möglich ist.

Durch die Durchführung von Relativmessungen der ausgesuchten Wellenlängen entsteht eine Unabhängigkeit von absoluten Werten, die durch Schwankungen der Signale oder Kratzer oder Verunreinigungen auf der Sensorabdeckung entstehen können. Durch eine automatische (dynamische) Anpassung der Lichtintensität der Lichtquellen wird eine Erweiterung des Messbereichs ermöglicht, so dass zusätzlich Pflanzen erfasst werden, die sich in einem gewissen Abstandsbereich zur Sensorscheibe bewegen.

Wie bereits zuvor erwähnt, werden zur Bestimmung des Reifegrades von Pflanzen zwei selektive Wellenlängen ausgewählt, wobei diese vorteilhaft in einem Spektralbereich von 650 bis 900 nm liegen, da sich innerhalb dieses Bereiches die Kurven der gemessenen Reflexion eines "grünen" und eines "braunen" Pflanzenteiles wie z.B. eines Maisblattes zumindest bereichsweise sehr unterscheiden. So ist beispielsweise das Verhältnis der Wellenlängen λ₁= 850 nm und λ₂= 660 nm für eine Auswertung zur Bestimmung des Reifegrades gut geeignet.

Die LEDs und die Fotodiode der Messeinrichtung werden über einen Mikrocontroller angesteuert bzw. ausgelesen. Auf Basis der bekannten Signaturen für Erntegut und Störgrößen werden die Daten gefiltert. Die bereinigten Messdaten (Quotienten) werden statistisch ausgewertet, gemittelt und auf Basis abgelegter Kalibrierungen beispielsweise beim Feldhäcksler in eine relative Schnittlänge umgerechnet. Über die CAN-Schnittstelle des Mikrocontrollers wird dem Fahrer diese Information bereitgestellt. Der Fahrer trifft die Zuordnung der relativen Schnittlänge zu einer absoluten Schnittlänge (z.B. von 4 bis 22 mm). Hierdurch kann die Häcksellänge einerseits voll automatisiert verändert werden, andererseits basiert die Festlegung des landwirtschaftlich sinnvollen Dynamikbereiches auf den Erfahrungen des Anwenders. Die gemessenen Reifegradwerte können teilflächenspezifisch für eine offline-Analyse abgespeichert werden. Erfolgreiche Feldversuche mit einem erfindungsgemäßen Feldhäcksler belegen, dass auf Basis der selbstreinigenden Effekte und Signalfilterungen eine optoelektronische Messung mit einer zuvor beschriebenen Messeinrichtung im Anfangsbereich des Erntegutflusses, insbesondere im Maisgebiss, zur Ermittlung des Reifegrades der Pflanzen durchgeführt werden kann.

Die Methode der Reifegradmessung ist prinzipiell auch für andere Erntegüter geeignet. Die erfolgreiche Applikation des Sensors unter starkem Störgrößeneinfluss bietet gegebenenfalls auch Optionen zur Bestimmung weiterer Pflanzenparameter (z.B.: Pflanzenmasse, Krankheiten, Nährstoffe).

Im folgenden wird die Erfindung zur Verdeutlichung anhand eines Ausführungsbeispiels und Darstellungen erläutert.

Es zeigen:
**Fig. 1** eine Seitenansicht eines selbstfahrenden Feldhäckslers mit Maiserntevorsatz in schematischer Darstellung,
**Fig. 2** eine perspektivische Teilansicht von schräg vorne auf den Feldhäcksler nach Fig. 1,
**Fig. 3** ein Diagramm mit Kurven des typischen Reflexionsverhaltens für eine "grüne" und eine "braune" Maispflanze,
**Fig. 4** ein Schaubild zum Messprinzip zur Bestimmung des Reifegrades von Erntegut.

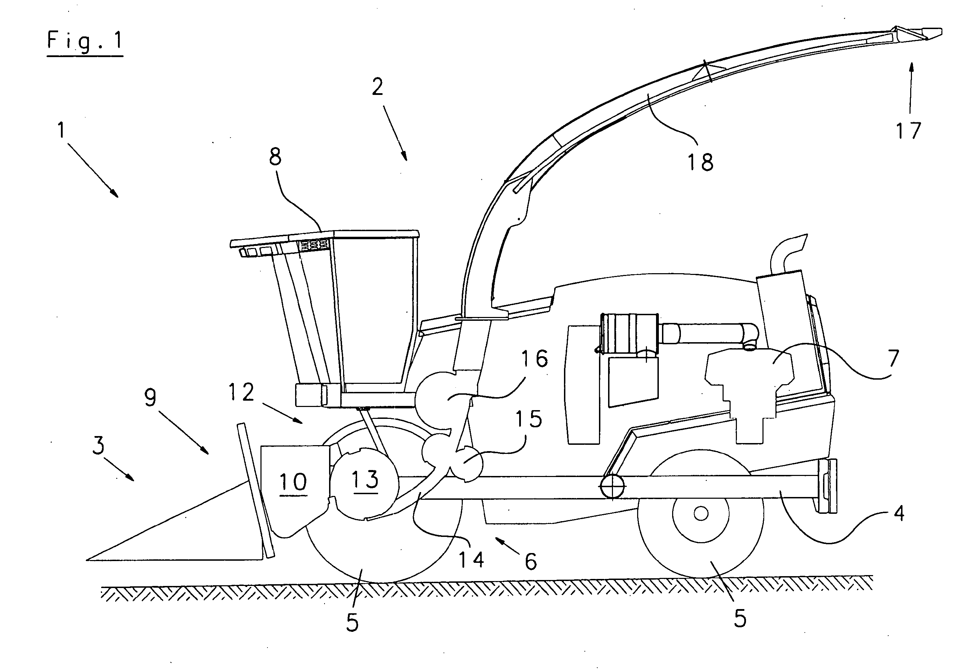

Als ein Ausführungsbeispiel einer landwirtschaftlichen Erntemaschine 1 nach der Erfindung zeigt Fig. 1 einen selbstfahrenden Feldhäcksler 2 mit einem Erntevorsatzgerät 3 für die Maisernte als Aufnahme und Fördereinrichtung. Zur besseren Erkennbarkeit der Maschinenbaugruppen sind diese freigemacht und schematisch dargestellt. Der Feldhäcksler 2 ist auf einem Hauptrahmen 4 aufgebaut, der sich über Räder 5 gegen den Erdboden abstützt und die Erntebaugruppen 6 und den Antriebsmotor 7 mit seinen Nebenaggregaten sowie die Fahrerkabine 8 aufnimmt. Anhand der freiliegend dargestellten Erntebaugruppen 6 des Feldhäckslers lässt sich in Fig. 1 der Fluss des Ernteguts durch die Maschine gut erläutern und erkennen.

Das Erntegut, in diesem Ausführungsbeispiel Maispflanzen, werden vom Erntevorsatzgerät 3 abgeschnitten und dem Einzugsbereich 9 des Einzugs- und Förderaggregats 10 des Feldhäckslers 2 zugeführt. Dort erfassen die Einzugs- und Vorpresswalzen 11 das Erntegut und führen es kontinuierlich der Weiterverarbeitungseinrichtung 12 zu, wobei es schon erheblich gequetscht und vorverdichtet wird. Die Weiterverarbeitungseinrichtung 12, im hier beschriebenen Ausführungsbeispiel ein mit einer rotierenden Messertrommel ausgestattetes Häckselaggregat 13 schneidet das Erntegut, beschleunigt es und schleudert es in den Förderschacht 14 wo es je nach Bedarf noch einen Körnerprozessor 15 durchläuft um dann von einem Nachbeschleuniger 16 als Gutstrom weiter in Richtung Auswurföffnung 17 des Auswurfkrümmers 18 geschleudert zu werden. Die Schnittlänge des Ernteguts ist dabei abhängig von der Vorschubgeschwindigkeit des Einzugs- und Förderaggregats 10 und der Drehzahl der Messertrommel des Häckselaggregats 13.

Es ist bekannt, dass für eine optimale Silagequalität der Reifegrad der Pflanzen maßgeblich die Häcksellänge bestimmt, weshalb bei modernen Häckslern eine Verstellbarkeit der Häcksellänge durch den Fahrer während des Erntevorgangs Stand der Technik ist. Diese Einstellung erfordert vom Fahrer jedoch sehr viel Erfahrung und zusätzliche Aufmerksamkeit. Der erfindungsgemäße Feldhäcksler 2 hingegen verfügt über eine Messeinrichtung 19, deren ermittelten Daten nach Auswertung durch einen Mikrocontroller den Fahrer bei diesen Aufgaben durch direkte Anzeige der aktuell optimalen Sollschnittlänge unterstützt, oder durch automatische Regelung der Schnittlängeneinstellung ganz entlastet und dabei eine wesentliche Qualitätsverbesserung des Ernteguts bewirkt.

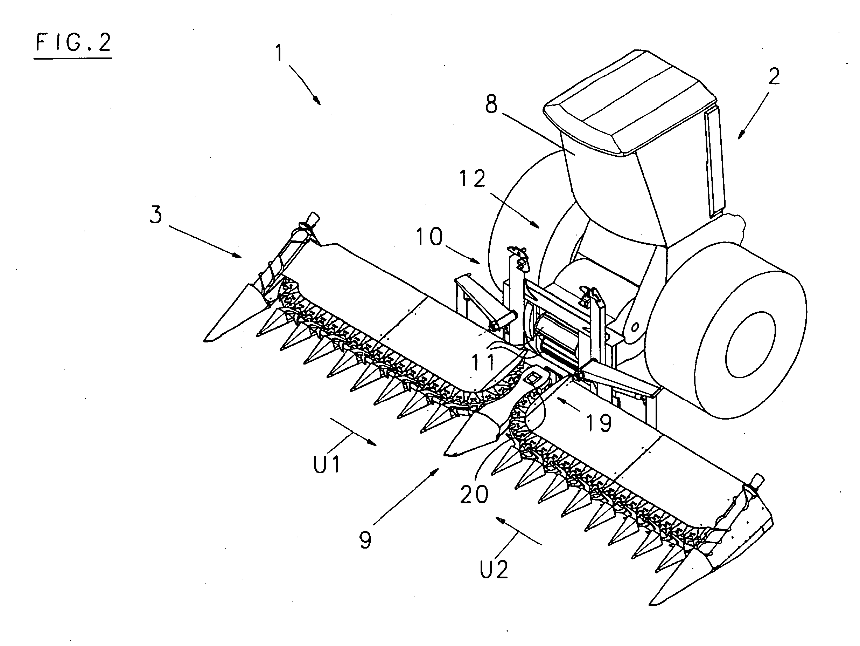

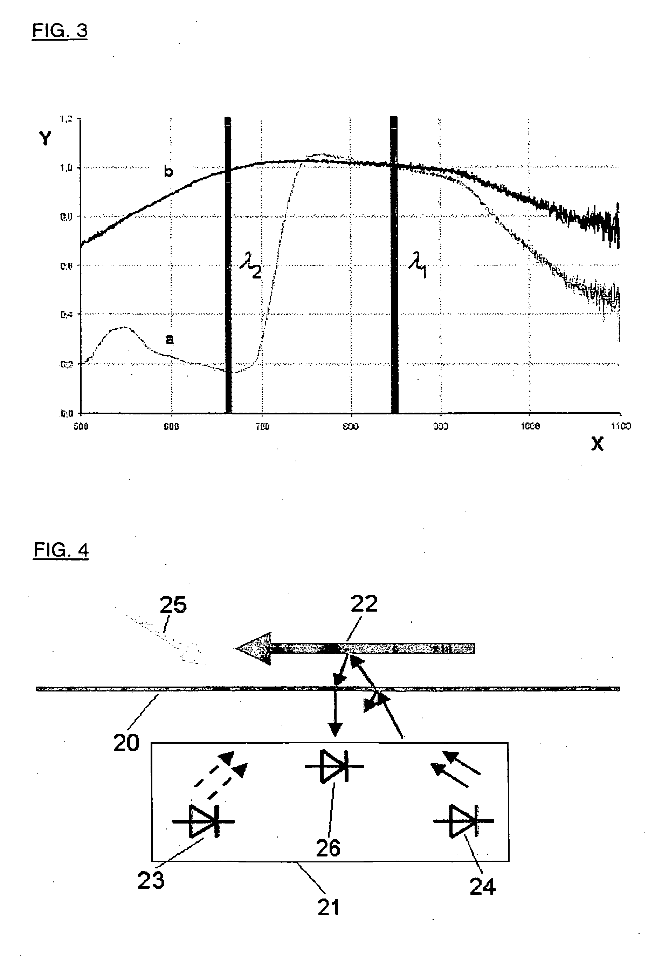

In der perspektivischen Ansicht der Fig. 2 auf das Erntevorsatzgerät 3 des Feldhäckslers 2 nach der Erfindung ist die besonders vorteilhafte Anordnung der Messeinrichtung 19 im Einzugsbereich 9 des Feldhäckslers 2 zu erkennen. Das gesamte vom Erntevorsatzgerät 3 erfasste und abgeschnittene Erntegut wird durch dieses in den Richtungen U1 und U2 zur Mitte gefördert, wo es dann von den Einzugs- und Förderwalzen 11 derart erfasst wird, dass es mit dem unteren Stängelende voran in das Einzugs- und Förderaggregat 10 eingezogen wird, wobei es die Messeinrichtung 19 überstreicht und so optimal von dieser erfasst wird. Durch die Anordnung der Messeinrichtung 19 unterhalb des Erntegutstromes wird der Kontakt der Pflanzen mit der die Messeinrichtung 19 abdeckenden Sensorscheibe 20 durch die Schwerkraft der Pflanzen noch zusätzlich unterstützt, wodurch außerdem eine ständige Selbstreinigung der Sensorscheibe 20 durch die Pflanzen gewährleistet wird. Die Anordnung der Messeinrichtung 19 vor weiterverarbeitenden Einrichtungen der Erntemaschine hat des weiteren noch erheblichen vorteilhaften Einfluss auf die Erfassung und Auswertung der Messdaten. Nur bis zur Weiterverarbeitung der Erntegutpflanzen ist es möglich an der ganzen Pflanze zu messen, also beim hier beschriebenen Ausführungsbeispiel in erster Linie an den großflächigen Blättern und Außenbereichen der Maispflanzen, die insbesondere durch ihre Farbe den Reifegrad der Pflanze erkennen lassen. Weiter stromab des Erntegutflusses wird die Pflanze zunehmend gequetscht, zerschnitten und vermengt, wodurch eine Messung des Reifegrades im Gutstrom insbesondere nach dem Häckselaggregat 13 sehr viel schwieriger und ungenauer wird. Die folgende Beschreibung der Messeinrichtung 19 und des Messprinzips verdeutlichen dieses Problem und die erfinderische Lösung der Messeinrichtung 19 der Erntemaschine 1 nach der Erfindung. Das Messprinzip der Messeinrichtung 19 basiert auf dem bekannten spektralen Reflexionsverhalten von Pflanzen und arbeitet mit einem optoelektronischen Sensor 21. Im Diagramm der Fig. 3 zeigt die Kurve a ein gemessenes Spektrum eines "grünen" und die Kurve b das entsprechende Spektrum eines "braunen" Maisblattes, wobei die beiden Kurven bei 850 nm (Y=1,0) normiert wurden. Die Werte der Y-Achse sind Werte dieser normierten Reflexion. Die für Grünpflanzen charakteristische Steigung oberhalb von 700 nm nimmt mit zunehmendem Reifegrad ab, bei "braunen" Maispflanzen hingegen ergeben sich über einen sehr großen Spektralbereich von ca. 650 bis 900 nm ähnliche Werte. Ähnlich wie bei der Definition des NDVI (Normalized Difference Vegetation Index) als Maß für die physiologische Aktivität von Pflanzen kann man zwei selektive Wellenlängen zur Bestimmung des Reifegrades auswählen. So ist für die Bestimmung des Reifegrades durch die Messeinrichtung 19 der erfindungsgemäßen Erntemaschine 1 vorteilhaft das Verhältnis der in Fig. 3 auf der X Achse markierten optimalen Wellenlängen λ₁=850 nm und λ₂=660 nm ausgewählt worden wobei die Kurven a und b deutlich zeigen, dass selbst bei Schwankungen der Wellenlängen λ₁ und λ₂ um jeweils + - 50 nm noch ähnlich deutliche Ergebnisse erzielt werden. Fig. 4 zeigt ein Schema der Messeinrichtung 19 des erfindungsgemäßen Feldhäckslers 2 und verdeutlicht das Messprinzip zur Bestimmung des Reifegrades. Das Erntegut 22 wird in einer Richtung über die optisch transparente Sensorscheibe 20, welche als Schutzabdeckung für den darunter liegenden eigentlichen Sensor 21 der Messeinrichtung 19 dient, geführt. Hierbei wird der Effekt der "Selbstreinigung" der Oberfläche der Sensorscheibe 20 durch die Maispflanzen ausgenutzt.

Der Sensor 21 besteht aus zwei schmalbandigen Lichtquellen 23, 24 in Form von LEDs die das Erntegut 22 mit den unterschiedlichen Wellenlängen λ₁ und λ₂ gepulst beleuchten, wobei die Pulsung mit einer derartigen Frequenz erfolgt, dass die Messungen am gleichen Messpunkt durchgeführt werden. Durch den gepulsten Betrieb der Lichtquellen 23, 24 wird erst ermöglicht mit zwei oder auch mehr Lichtquellen unbeeinflusst voneinander zu arbeiten, des weiteren erlaubt die Pulsung eine selektive Detektion von Störgrößen wie z. B. Fremdlicht 25. Um eventuell wechselnde Abstände des Ernteguts 22 zur Sensorscheibe 20 ausgleichen zu können, wird die Lichtintensität der Lichtquellen 23, 24 automatisch angepasst, wodurch ein größerer Messbereich (Abstand zum Sensor) erfasst wird. Zur Messung der Reflexion des Lichts der Lichtquellen 23, 24 durch das Erntegut 22 wird als Fotoempfänger der Messeinrichtung 19 nur eine einzelne Fotodiode 26 verwendet, wodurch die durchgeführten Relativmessungen unabhängig von Bauteilestreuungen sind. Durch die Durchführung von Relativmessungen der ausgesuchten Wellenlängen λ₁ und λ₂ entsteht eine Unabhängigkeit von absoluten Werten, die durch Schwankungen der Signale oder Kratzer auf der Sensorscheibe 20 entstehen können.

Die LEDs 23, 24 und die Fotodiode 26 werden über einen nicht dargestellten Mikrocontroller angesteuert bzw. ausgelesen. Auf Basis der bekannten Signaturen für Erntegut 22 und Störgrößen werden die Daten gefiltert. Die bereinigten Messdaten (Quotienten) werden statistisch ausgewertet, gemittelt und auf Basis der abgelegten Kalibrierungen in eine relative Schnittlänge umgerechnet. Über die Schnittstelle des Mikrocontrollers, im Ausführungsbeispiel über eine CAN-Schnittstelle, wird dem Fahrer bzw. der Steuerung der Erntemaschine 1 diese Information bereitgestellt. Entweder trifft wahlweise der Fahrer daraufhin die Zuordnung der angezeigten relativen Schnittlänge zu einer absoluten Schnittlänge (z.B. von 4 bis 22 mm) oder es erfolgt voll automatisiert eine Veränderung der Häcksellängeneinstellung. Zusätzlich können die gemessenen Reifegradwerte teilflächenspezifisch für eine offline-Analyse abgespeichert werden.

## Patentansprüche

1. Landwirtschaftliche Erntemaschine (1) mit mindestens einer Einrichtung zur Aufnahme und Förderung des Erntegutes (3) und einer Weiterverarbeitungseinrichtung (12) zur Bearbeitung des Erntegutes, wobei die Bearbeitungsintensität des Erntegutes durch die Weiterverarbeitungseinrichtung (12) in Abhängigkeit mindestens eines Parameters des Erntegutes, welcher durch eine Messeinrichtung (19) ermittelt wird, selbsttätig einstellbar ist, und wobei es sich um eine optoelektronische Messeinrichtung (19) handelt, **dadurch gekennzeichnet, dass** die Messeinrichtung (19) zur Online-Messung im Erntegutfluss vor der Weiterverarbeitungseinrichtung (12) der Erntemaschine (1) angeordnet ist und die von der Messeinrichtung (19) ermittelten Erntegutparameter Rückschlüsse auf den Reifegrad des Ernteguts ermöglichen.

2. Landwirtschaftliche Erntemaschine (1) nach Anspruch 1, **dadurch gekennzeichnet, dass** die Messeinrichtung (19) in einem mittleren Bereich der Aufnahme- und Fördereinrichtung (3) derart angeordnet ist, dass zumindest ein Großteil des aufgenommenen und der Weiterverarbeitungseinrichtung (12) der Erntemaschine zugeführten Ernteguts den Erfassungsbereich der Messeinrichtung (19) passiert.

3. Landwirtschaftliche Erntemaschine (1) nach zumindest einem der vorhergehenden Ansprüche, **dadurch gekennzeichnet, dass** ein Sensor (21) der Messeinrichtung (19) vorzugsweise unterhalb des Erntegutstromes unter einer optisch transparenten Sensorscheibe (20) angeordnet ist, welche im Kontakt mit dem Emtegutstrom steht.

4. Landwirtschaftliche Erntemaschine (1) nach zumindest einem der vorhergehenden Ansprüche, **dadurch gekennzeichnet, dass** das Messprinzip der Messeinrichtung (19) auf dem spektralen Reflexionsverhalten von Pflanzen basiert und vorzugsweise in einem Spektralbereich von 600 bis 900 nm arbeitet.

5. Landwirtschaftliche Erntemaschine (1) nach zumindest einem der vorhergehenden Ansprüche, **dadurch gekennzeichnet, dass** die Messeinrichtung (19) mindestens zwei Lichtquellen (23, 24) mit unterschiedlichen Wellenlängen umfasst.

6. Landwirtschaftliche Erntemaschine (1) nach den Ansprüchen 4 und 5, **dadurch gekennzeichnet, dass** zumindest eine Lichtquelle (23, 24) in einem Spektralbereich von 600 bis 700 nm, vorzugsweise mit einer Wellenlänge von 660 nm arbeitet und zumindest eine Lichtquelle (23, 24) in einem Spektralbereich von 800 bis 900 nm, vorzugsweise mit einer Wellenlänge von 850 nm arbeitet.

7. Landwirtschaftliche Erntemaschine (1) nach zumindest einem der vorhergehenden Ansprüche, **dadurch gekennzeichnet, dass** die Lichtintensität der Lichtquellen (23, 24) der Messeinrichtung (19) automatisch (dynamisch) den wechselnden Abständen des Ernteguts zur Sensorscheibe(20) der Messeinrichtung (19) angepasst wird, so das ein größerer Messbereich erfasst wird.

8. Landwirtschaftliche Erntemaschine (1) nach zumindest einem der vorhergehenden Ansprüche, **dadurch gekennzeichnet, dass** die Lichtquellen (23, 24) der Messeinrichtung (19) gepulst betrieben werden.

9. Landwirtschaftliche Erntemaschine (1) nach zumindest einem der vorhergehenden Ansprüche, **dadurch gekennzeichnet, dass** durch die Messeinrichtung (19) Relativmessungen ausgesuchter Wellenlängen durchgeführt werden, wobei die Messeinrichtung (19) nur einen Fotoempfänger (26) umfasst.

10. Landwirtschaftliche Erntemaschine (1) nach zumindest einem der vorhergehenden Ansprüche, **dadurch gekennzeichnet, dass** die Messeinrichtung (19) über einen Mikrocontroller angesteuert und/oder ausgelesen wird.

11. Landwirtschaftliche Erntemaschine (1) nach Anspruch 10, **dadurch gekennzeichnet, dass** der Mikrocontroller auf Basis bekannter Signaturen für Erntegut und Störgrößen die Messdaten filtert, statistisch auswertet und mittelt und auf Basis abgelegter Kalibrierungen in einen relativen Wert für die Bearbeitungsintensität des Erntegutes durch die Weiterverarbeitungseinrichtung (12) umrechnet.

12. Landwirtschaftliche Erntemaschine (1) nach zumindest einem der vorhergehenden Ansprüche, **dadurch gekennzeichnet, dass** ein Mikrocontroller über eine CAN-Schnittstelle eine Information über einen, auf Basis des Reifegrades des Erntegutes ermittelten, relativen Wert für die Bearbeitungsintensität des Erntegutes durch die Weiterverarbeitungseinrichtung (12) bereitstellt.

13. Landwirtschaftliche Erntemaschine (1) nach zumindest einem der vorhergehenden Ansprüche, **dadurch gekennzeichnet, dass** die Weiterverarbeitungseinrichtung (12) der Erntemaschine (1) als Schneid- oder Häckselaggregat (13) ausgebildet ist, welches das Erntegut in einstellbaren Schnittlängen zerkleinert.

14. Landwirtschaftliche Erntemaschine (1) nach Anspruch 13, **dadurch gekennzeichnet, dass** ein Mikrocontroller über eine CAN-Schnittstelle eine Information über einen, auf Basis des Reifegrades des Erntegutes ermittelten, relativen Wert für die Schnittlänge des Erntegutes bereitstellt.

15. Landwirtschaftliche Erntemaschine (1) nach zumindest einem der vorhergehenden Ansprüche, **dadurch gekennzeichnet, dass** die Messung durch die Messeinrichtung (19) an der ganzen Pflanze vor ihrer Weiterverarbeitung erfolgt.

16. Landwirtschaftliche Erntemaschine (1) nach zumindest einem der vorhergehenden Ansprüche, **dadurch gekennzeichnet, dass** die Schnittlänge des Emtegutes selbsttätig in Abhängigkeit des ermittelten Reifegrades der Pflanzen einstellbar ist.

17. Landwirtschaftliche Erntemaschine (1) nach zumindest einem der vorhergehenden Ansprüche, **dadurch gekennzeichnet, dass** die Aufnahme- und Fördereinrichtung (3) ein Emtevorsatzgerät ist.

18. Landwirtschaftliche Erntemaschine (1) nach zumindest einem der vorhergehenden Ansprüche, **dadurch gekennzeichnet, dass** es sich um einen selbstfahrenden Feldhäcksler (2) handelt.

## Claims

1. Agricultural harvesting machine (1) having at least one arrangement for picking up and feeding harvested crop (3) and an arrangement (12) for further processing for doing work on the harvested crop, the intensity with which work is done on the harvested crop by the arrangement (12) for further processing being able to be set automatically as a function of at least one parameter of the harvested crop which is determined by a measuring arrangement (19), the measuring arrangement (19) being an opto-electronic measuring arrangement, **characterised in that** the measuring arrangement (19) is arranged upstream of the arrangement (12) for further processing of the harvesting machine (1), to allow on-line measurement in the flow of harvested crop, and the parameters of the harvested crop which are determined by the measuring arrangement (19) allow conclusions to be drawn as to the ripeness of the harvested crop.

2. Agricultural harvesting machine (1) according to claim 1, **characterised in that** the measuring arrangement (19) is arranged in a central region of the picking-up and feeding arrangement (3) in such a way that at least a major proportion of the harvested crop which is picked up and fed to the arrangement (12) for further processing of the harvesting machine passes through the region covered by the measuring arrangement (19).

3. Agricultural harvesting machine (1) according to at least one of the foregoing claims, **characterised in that** a sensor (21) of the measuring arrangement (19) is arranged underneath an optically transparent sensor plate (20) which is in contact with the flow of harvested crop, preferably below the flow of harvested crop.

4. Agricultural harvesting machine (1) according to at least one of the foregoing claims, **characterised in that** the principle of measurement of the measuring arrangement (19) is based on the spectral reflective characteristics of plants and preferably operates in a spectral range from 600 to 900 nm.

5. Agricultural harvesting machine (1) according to at least one of the foregoing claims, **characterised in that** the measuring arrangement (19) comprises at least two light sources (23, 24) of different wavelengths.

6. Agricultural harvesting machine (1) according to claims 4 and 5, **characterised in that** at least one light source (23, 24) operates in a spectral range from 600 to 700 nm, and preferably at a wavelength of 660 nm, and at least one light source (23, 24) operates in a spectral range from 800 to 900 nm, and preferably at a wavelength of 850 nm.

7. Agricultural harvesting machine (1) according to at least one of the foregoing claims, **characterised in that** the intensity of the light from the light sources (23, 24) of the measuring arrangement (19) is adjusted automatically (dynamically) to the varying distances between the harvested crop and the sensor plate (20) of the measuring arrangement (19) so that a larger range of measurement is covered.

8. Agricultural harvesting machine (1) according to at least one of the foregoing claims, **characterised in that** the light sources (23, 24) of the measuring arrangement (19) are operated in a pulsed manner.

9. Agricultural harvesting machine (1) according to at least one of the foregoing claims, **characterised in that** relative measurements of selected wavelengths are made by the measuring arrangement (19), the measuring arrangement (19) comprising only one photo-receiver (26).

10. Agricultural harvesting machine (1) according to at least one of the foregoing claims, **characterised in that** the measuring arrangement (19) is operated and/or read from by means of a microcontroller.

11. Agricultural harvesting machine (1) according to claim 10, **characterised in that** the microcontroller filters the measured data on the basis of known signatures for harvested crop and interfering factors, analyses and averages it statistically, and converts it on the basis of stored calibrations into a relative value for the intensity with which work is done on the harvested crop by the arrangement (12) for further processing.

12. Agricultural harvesting machine (1) according to at least one of the foregoing claims, **characterised in that** a microcontroller makes available, via a CAN interface, information on a relative value, determined on the basis of the ripeness of the harvested crop, for the intensity with which work is done on the harvested crop by the arrangement (12) for further processing.

13. Agricultural harvesting machine (1) according to at least one of the foregoing claims, **characterised in that** the arrangement (12) for further processing of the harvesting machine (1) is in the form of a cutting or chopping assembly (13) which comminutes the harvested crop into cut lengths which can be set.

14. Agricultural harvesting machine (1) according to claim 13, **characterised in that** a microcontroller makes available, via a CAN interface, information on a relative value, determined on the basis of the ripeness of the harvested crop, for the cut length of the harvested crop.

15. Agricultural harvesting machine (1) according to at least one of the foregoing claims, **characterised in that** the measurement is made by the measuring arrangement (19) on the entire plant before the plant is subjected to further processing.

16. Agricultural harvesting machine (1) according to at least one of the foregoing claims, **characterised in that** the cut length of the harvested crop can be set automatically as a function of the ripeness which is determined for the plants.

17. Agricultural harvesting machine (1) according to at least one of the foregoing claims, **characterised in that** the picking-up and feeding arrangement (3) is a header.

18. Agricultural harvesting machine (1) according to at least one of the foregoing claims, **characterised in that** it is a self-propelled forage harvester (2).

## Revendications

1. Machine agricole récolteuse (1) comportant au moins une installation pour prendre et transférer les produits de récolte (3) et une installation de traitement (12) pour traiter les produits de récoltés,
l'intensité du traitement des produit récoltés est réglée automatiquement par l'installation de traitement (12) en fonction d'au moins un paramètre des produits récoltés, paramètre déterminé par une installation de mesure (19), et
l'installation de mesure (19) est une installation optoélectronique,
**caractérisée en ce que**
l'installation de mesure (19) est installée pour effectuer une mesure en ligne dans le flux des produits récoltés en amont de l'installation de traitement (12) de la machine récolteuse (1) et les paramètres de récolte fournis par l'installation de mesure (19) permettent de tirer des conclusions concernant le degré de maturité des produits récoltés.

2. Machine agricole récolteuse (1) selon la revendication 1,
**caractérisée en ce que**
l'installation de mesure (19) se situe dans la zone médiane de l'installation de prise et de transfert (3) pour qu'au moins une grande partie des produits récoltés pris et fournis à l'installation de traitement (12) de la machine récolteuse traversent la zone de saisie de l'installation de mesure (19).

3. Machine agricole récolteuse (1) selon au moins l'une des revendications précédentes,
**caractérisée par**
un capteur (21) de l'installation de mesure (19), prévu de préférence sous le flux de produits récoltés et sous une vitre (20) optiquement transparente, est en contact avec le flux de produits récoltés.

4. Machine agricole récolteuse (1) selon au moins l'une des revendications précédentes,
**caractérisée en ce que**
le principe de mesure de l'installation de mesure (19) est fondé sur le comportement de réflexion spectrale des plantes et travaille de préférence dans une plage spectrale comprise entre 600 nm et 900 nm.

5. Machine agricole récolteuse (1) selon au moins l'une des revendications précédentes,
**caractérisée en ce que**
l'installation de mesure (19) comprend au moins deux sources lumineuses (23, 24) fonctionnant avec des longueurs d'onde différentes.

6. Machine agricole récolteuse (1) selon les revendications 4 et 5,
**caractérisée en ce qu'**
au moins une source lumineuse (23, 24) fonctionne dans une plage spectrale de 600 nm à 700 nm de préférence avec une longueur d'onde de 660 nm et au moins une source lumineuse (23, 24) travaille dans une plage spectrale de 800 nm à 900 nm de préférence avec une longueur d'onde de 850 nm.

7. Machine agricole récolteuse (1) selon au moins l'une des revendications précédentes,
**caractérisée en ce que**
l'intensité lumineuse des sources lumineuses (23, 24) de l'installation de mesure (19) est adaptée automatiquement (de manière dynamique) aux écarts variables entre les produits récoltés et la vitre (20) du capteur de l'installation de mesure (19) pour saisir une grande plage de mesure.

8. Machine agricole récolteuse (1) selon au moins l'une des revendications précédentes,
**caractérisée en ce que**
les sources lumineuses (23, 24) de l'installation de mesure (19) fonctionnent de manière pulsée.

9. Machine agricole récolteuse (1) selon au moins l'une des revendications précédentes,
**caractérisée en ce que**
l'installation de mesure (19) qui ne comporte qu'un photorécepteur (26) permet d'effectuer des mesures relatives sur des longueurs d'onde sélectionnées.

10. Machine agricole récolteuse (1) selon au moins l'une des revendications précédentes,
**caractérisée en ce que**
l'installation de mesure (19) est commandée et/ou est lue par un microcontrôleur.

11. Machine agricole récolteuse (1) selon la revendication 10,
**caractérisée en ce que**
le microcontrôleur filtre les données de mesure sur le fondement de signatures connues des produits récoltés et de grandeurs perturbatrices, les exploite statistiquement, forme des moyennes et les convertit en une valeur relative à partir de calibrages enregistrés de l'intensité de traitement des produits récoltés par l'installation de traitement (12).

12. Machine agricole récolteuse (1) selon au moins l'une des revendications précédentes,
**caractérisée en ce qu'**
par l'intermédiaire d'une interface CAN un microcontrôleur fournit une information qui concerne une valeur relative de l'intensité de traitement des produits récoltés par l'installation de traitement (12), cette valeur relative est fondée sur le degré de maturité des produits récoltés.

13. Machine agricole récolteuse (1) selon au moins l'une des revendications précédentes,
**caractérisée en ce que**
l'installation de traitement (12) de la machine de récolte (1) est réalisée sous la forme d'un module de coupe ou de hachage (13) qui réduit les produits récoltés à des longueurs de coupe réglables.

14. Machine agricole récolteuse (1) selon la revendication 13,
**caractérisée en ce qu'**
un microcontrôleur fournit, par l'intermédiaire d'une interface CAN, une information qui concerne une valeur relative de la longueur de coupe des produits récoltés, cette valeur relative est fondée sur le degré de maturité des produits récoltés.

15. Machine agricole récolteuse (1) selon au moins l'une des revendications précédentes,
**caractérisée en ce que**
la mesure est faite par l'installation de mesure (19) sur la plante entière, avant son traitement.

16. Machine agricole récolteuse (1) selon au moins l'une des revendications précédentes,
**caractérisée en ce que**
la longueur de coupe des produits récoltés se règle automatiquement en fonction du degré de maturité déterminé des plantes.

17. Machine agricole récolteuse (1) selon au moins l'une des revendications précédentes,
**caractérisée en ce que**
l'installation de prise et de transfert (3) est un équipement installé devant la machine.

18. Machine agricole récolteuse (1) selon au moins l'une des revendications précédentes,
**caractérisée en ce que**
la machine est une ensileuse automotrice (2).
